# EUROPEAN PATENT SPECIFICATION

(11) **EP 3 521 114 B1**
(45) Date of publication and mention of the grant of the patent: **05.05.2021**
(21) Application number: 17855224.6
(22) Date of filing: 29.03.2017
(51) Int. Cl.: B60T 7/10, G05G 1/04, G05G 5/18

(54) **PARKING BRAKE LEVER DEVICE**
FESTSTELLBREMSENHEBELVORRICHTUNG
DISPOSITIF DU TYPE LEVIER DE FREIN DE STATIONNEMENT

(30) Priority: 28.09.2016 JP 2016189714
(43) Date of publication of application: 07.08.2019
(73) Proprietor: Toyoda Iron Works Co., Ltd., Toyota-shi Aichi 471-8507 (JP)
(72) Inventor: RYUTAKI, Kozo, Toyota-shi Aichi 471-8507 (JP)
(74) Representative: TBK
(86) International application number: PCT/JP2017/012910
(87) International publication number: WO 2018/061265

(56) References cited:
- DE-T2- 69 909 679
- JP-A- H11 208 428
- JP-A- H11 208 428
- JP-A- 2010 018 247
- JP-U- H0 625 067

## Description

### FIELD

The present invention relates to a parking brake lever device in which a ratchet provided with a teeth section and a sector are separately formed.

### BACKGROUND

Conventionally, it has been suggested that various techniques relating to a parking brake lever device in which a ratchet provided with a teeth section and a sector are separately formed. For example, a parking lever device disclosed in JP H06 25067 U has a sector comprising a sector body including a fixing part to a vehicle body and formed to have the prescribed thickness and an engagement teeth part having a plurality of engagement teeth continuously formed and fixed to an outer edge part of the sector body.

A brake is actuated by pivoting a lever body pivotally attached to the sector, and a pivoting state is maintained by locking a pawl part attached to the lever body with engagement teeth of the sector.

The sector body is formed of a plastically deformable member, and the engagement teeth part is fixed to the sector body by loading the engagement teeth part in a cut part formed in a prescribed shape from an edge part of the sector body in the thickness direction of the sector body and plastically deforming prescribed parts of the cut part of the sector body to the loaded engagement teeth side.

According to the parking lever device as described above, since the sector body and the engagement teeth part separately formed are coupled and fixed by plastically deforming the sector body, machining is quickened and facilitated. Also, since the engagement teeth part is certainly fixed to the sector body by plastic deformation, rattling of the engagement teeth part is effectively eliminated.
DE 699 09 679 T2 discloses a parking brake lever having the features of the preamble of claim 1. Further related prior art is disclosed in JP H11 208428 A and JP 2010 018247 A.

### SUMMARY

### Problems to be solved by the Invention

However, since the sector body and the engagement teeth part are the thickest in components of the parking lever device in view of ensuring the strength of a lock part formed by the pawl part of the lever body and the engagement teeth of the sector, the thickness of the sector body and the engagement teeth part prevents reduction in weight and cost of the parking lever device.

The present invention is made in the context of circumstances mentioned above, and an object thereof is to provide a parking brake lever device reducing weight and cost while ensuring the strength of a teeth section provided in a ratchet formed separately from a sector.

### Means for Solving the Problems

The above object is solved by a parking brake lever device having the features of claim 1. Advantageous further developments are set out in the dependent claims.

### Effects of the Invention

In the parking brake lever device according to claim 1, since the ratchet is fixed to the sector, the ratchet and the sector are separately formed. Since the thickness of the sector is thinner than the thickness of the ratchet, mass and cost of the sector are reduced. Further, the strength of the teeth section provided in the ratchet is maintained by setting the thickness of the ratchet to the conventionally determined thickness. Accordingly, reduction in weight and cost can be achieved while ensuring the strength of the teeth section provided in the ratchet separately formed from the sector.

Here, the each thickness of the sector and the ratchet is determined by a length in the axial direction of the pivot pin inserted into the sector. Incidentally, the pivot pin is provided so that the lever body can be pivoted with respect to the sector in a state where the lever body sandwiches the sector.

In the parking brake lever device according to claim 1, the protrusion part is protruded from the sector in the axial direction of the pivot pin, and the distal end part of the protrusion part protruded contacts the inner wall surface of the lever body. Accordingly, rattling of the lever body in the axial direction of the pivot pin (hereinafter, referred to as "rattling of the lever body") can be prevented.

In the parking brake lever device according to claim 1, the protrusion part of which distal end part contacts the inner wall surface of the lever body is provided on the sector thinner than the conventional product. Accordingly, components except for the sector can be replaced with the conventional products. Therefore, in a relationship with the conventional technique, parts can be used in common.

In the parking brake lever device according to claim 2, since the distal end part of the protrusion part protruded on the sector constantly contacts the inner wall surface of the lever body within a range of pivoting the lever body with respect to the sector, rattling of the lever body can be eliminated.

In the parking brake lever device according to claim 3, the each protrusion part provided on the one surface of the sector evenly contacts the inner wall surface of the lever body. Further by a relative positional relationship between the each protrusion part provided on the one surface of the sector and the protrusion part provided on the other surface of the sector, the distal end part of the each protrusion part contacts the inner wall surface of the lever body with a good balance. Accordingly, the lever body can be prevented from inclining toward the sector due to the contact of the distal end part of the each protrusion part.

In the parking brake lever device according to claim 4, since the distal end part of the each protrusion part provided on the one surface of the sector contacts the inner wall surface of the lever body at a position closer to and away from the pivoting center of the lever body, the rattling of the lever body can be efficiently eliminated.

### BRIEF DESCRIPTION OF DRAWINGS

[FIG. 1] FIG. 1 is a side view illustrating a parking brake lever device according to the present embodiment;
[FIG. 2] FIG. 2 is an exploded perspective view illustrating the parking brake lever device;
[FIG. 3] FIG. 3 is an exploded perspective view excerpted from one part of the components of the parking brake lever device;
[FIG. 4] FIG. 4 is a perspective view illustrating a sector and a ratchet included in the parking brake lever device;
[FIG. 5] FIG 5 is a perspective view illustrating the sector and the ratchet included in the parking brake lever device;
[FIG. 6] FIG. 6 is a view illustrating a positional relationship between a lever body and each protrusion part of the sector in the parking brake lever device;
[FIG. 7] FIG. 7 is a perspective view illustrating a variation of the sector; and
[FIG. 8] FIG. 8 is a perspective view illustrating the variation of the sector.

### DESCRIPTION OF EMBODIMENTS

Hereinafter, a parking brake lever device of the present invention will be described with reference to drawings based on a concrete embodiment of the present invention. Incidentally, a front-and-rear direction, an up-and-down direction and a right-and-left direction of the parking brake device are explained based on definitions of the front-and-rear direction, the up-and-down direction and the right-and-left direction illustrated in the drawings. And, the detailed explanation of the conventional technique of the parking brake device excluding the matters specifying the present invention may be omitted.

### [1. Outline of the Parking Brake Lever Device]

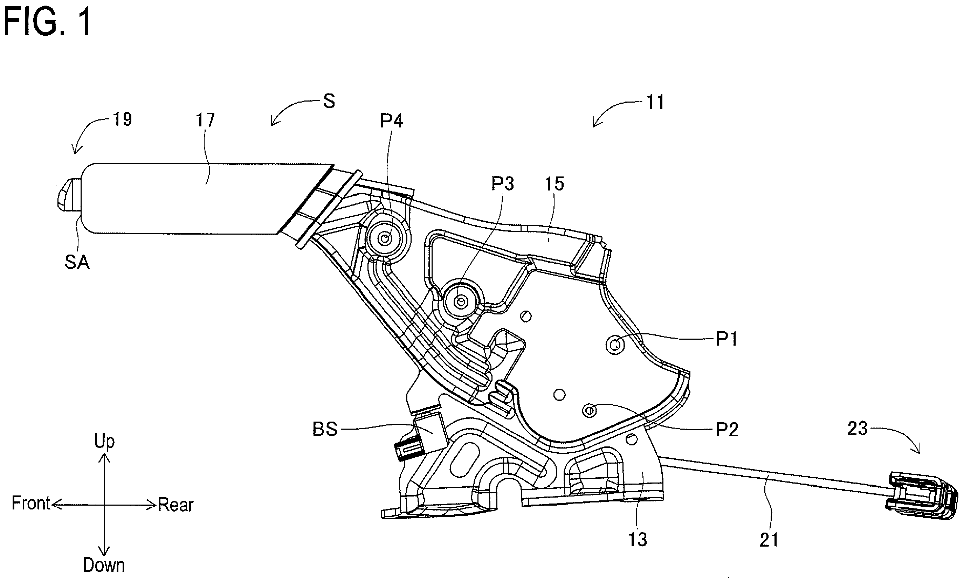

As illustrated in FIG. 1, a parking brake lever device 11 according to the present embodiment includes a sector 13, a lever body 15, a grip member 17, a release knob 19, a brake cable 21, an equalizer device 23, and a parking brake switch BS etc.

The sector 13 is a member having a substantially flat shape and is substantially vertically fixed to a floor of a vehicle (not illustrated). The lever body 15 is pivotally supported by the sector 13 via support pins PI, P2. A front end part of the lever body 15 is formed into a substantially cylindrical shape, and the grip member 17 is fitted therein. The front end part of the lever body 15 and the grip member 17 form an operation part S and is held by a driver when the lever body 15 is pivoted. The release knob 19 is protruded in a front end part SA of the operation part S.

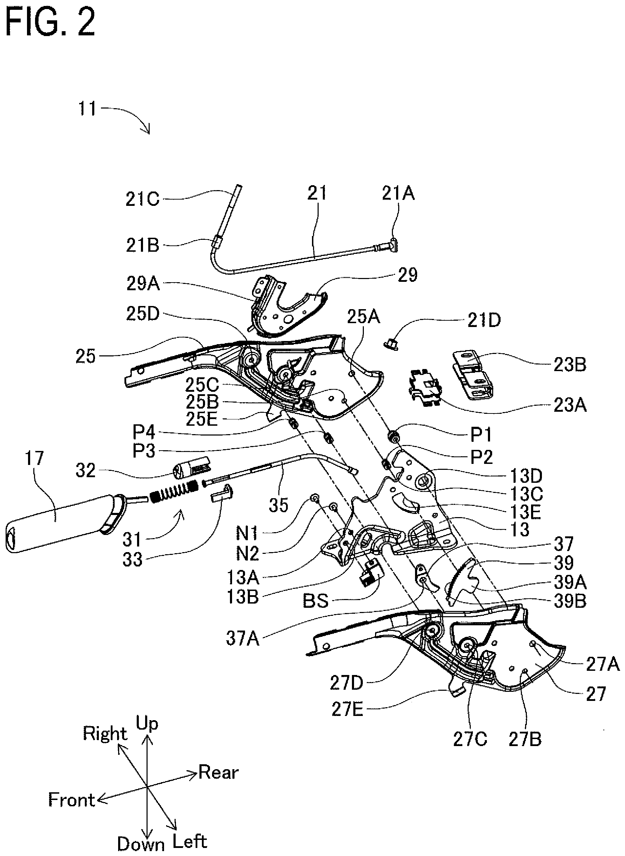

A front end part of the brake cable 21 is connected to the lever body 15 via a cable guide 29 illustrated in FIG. 2 described later. A rear end part of the brake cable 21 is connected to the equalizer device 23. Thus, the brake cable 21 can transmit a pivoting operation force of the lever body 15 to the equalizer device 23. The equalizer device 23 equalizes and transmits the pivoting operation force of the lever body 15 to right and left parking brakes of a vehicle (not illustrated). That is, a driver can actuate or release the right and left parking brakes of a vehicle (not illustrated) by pivoting the lever body 15 clockwise or counterclockwise in FIG. 1.

The parking brake switch BS detects whether the right and left parking brakes of the vehicle (not illustrated) is actuated or not by switching on and off of a contact. Incidentally, reference signs P3, P4 are support pin.

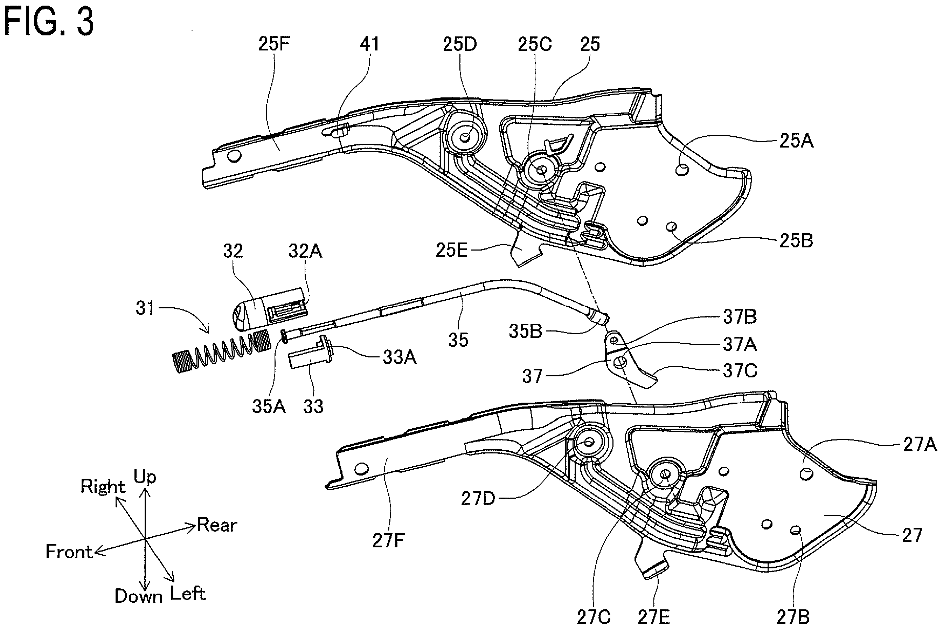

As illustrated in FIGs. 2 and 3, the parking brake lever device 11 according to the present embodiment includes a synthetic resin member 23A, an equalizer body 23B, a first half-cut body 25, a second half-cut body 27, and the cable guide 29 in addition to the sector 13, the grip member 17, the brake cable 21, and the parking brake switch BS.

The synthetic resin member 23A and the equalizer body 23B form the above-mentioned equalizer device 23. The synthetic resin member 23A is incorporated into the equalizer body 23B. The rear end part of the brake cable 21 is inserted into the equalizer body 23B via the synthetic resin member 23A. An engagement member 21A is provided at the rear end part of the brake cable 21. The rear end part of the brake cable 21 is connected to the equalizer device 23 by engaging the engagement member 21A of the brake cable 21 with the equalizer body 23B.

The first half-cut body 25 and the second half-cut body 27 form the above-mentioned lever body 15. Pin holes 25A, 25B, 25C, 25D and a flange part 25E are provided in the first half-cut body 25. Pin holes 27A, 27B, 27C, 27D, and a flange part 27E are provided in the second half-cut body 27.

The cable guide 29 has a cable groove 29A on a left side surface (inner surface) of the cable guide 29. The left side surface (inner surface) of the cable guide 29 is welded to a right side surface (outer surface) of the first half-cut body 25 in a state superimposed with each other. By this welding, a first opening to be communicated with the cable groove 29A is formed at a front lower end part of the cable guide 29, and a second opening to be communicated with the cable groove 29A is formed at a front upper end part of the cable guide 29. A bolt shaft 21C joined with the front end part of the brake cable 21 through a caulking member 21B is inserted into the first opening formed at the front lower end of the cable guide 29. The bolt shaft 21C passes through the cable groove 29A and protrudes from the second opening formed at the front upper end part of the cable guide 29. A nut member 21D is screw-fitted into a protrusion part of the bolt shaft 21C. Thus, the front end part of the brake cable 21 is connected to the lever body 15.

Further, the parking brake lever device 11 according to the present embodiment includes a compression coil spring 31, a first knob member 32, a second knob member 33, release rod 35, a pole 37, and a ratchet 39.

The compression coil spring 31 biases the above-mentioned release knob 19 toward the front direction. The release knob 19 is formed the first knob member 32 and the second knob member 33. Assembly of the compression coil spring 31, the first knob member 32, the second knob member 33, the release rod 35, and the pole 37 will be described later. The ratchet 39 is a member having a substantially flat plate shape and is provided with a protrusion part 39A and a teeth section 39B.

The sector 13 is provided with fixing pin holes 13A, 13B, a cut part 13C, a pivoting pin hole 13D, and a guiding pin hole 13E. The parking brake switch BS is fixed to the sector 13 by screwing screw members N1, N2 into the parking brake switch BS through the fixing pin holes 13A, 13B. The protrusion part 39A of the ratchet 39 is caulked at the cut part 13C. Thus, the ratchet 39 is fixed to the sector 13.

The support pin P1 is fitted through the pivoting pin hole 13D. A right end part of the support pin P1 is caulked from the right side surface (outer surface) of the first half-cut body 25 in a state where the right end part of the support pin P1 is passed through the pin hole 25A of the first half-cut body 25. A left end part of the support pin P1 is caulked from a left side surface (outer surface) of the second half-cut body 27 in a state where the left end part of the support pin P1 is passed through the pin hole 27A of the second half-cut body 27.

The guiding pin hole 13E is formed into an arc shape with the pivoting pin hole 13D as a center. The support pin P2 is fitted through the guiding pin hole 13E. A right end part of the support pin P2 is caulked from the right side surface (outer surface) of the first half-cut body 25 in a state where the right end part of the support pin P2 is passed through the pin hole 25B of the first half-cut body 25. A left end part of the support pin P2 is caulked from the left side surface (outer surface) of the second half-cut body 27 in a state where the left end part of the support pin P2 is passed through the pin hole 27B of the second half-cut body 27.

Thus, the lever body 15 formed by the first half-cut body 25 and the second half-cut body 27 is pivotally supported via the support pins P1, P2 in the sector 13. Incidentally, the support pin P1 functions as a pivoting shaft of the lever body 15.

Further, the pole 37 is pivotally supported via the support pin P3 in the lever body 15 formed by the first half-cut body 25 and the second half-cut body 27. Accordingly, the support pin P3 is fitted through a pivoting pin hole 37A provided at the substantial center of the pole 37. A right end part of the support pin P3 is caulked from the right side surface (outer surface) of the first half-cut body 25 in a state where the right end part of the support pin P3 is passed through the pin hole 25C of the first half-cut body 25. A left end part of the support pin P3 is caulked from the left side surface (outer surface) of the second half-cut body 27 in a state where the left end part of the support pin P3 is passed through the pin hole 27 C of the second half-cut body 27. Incidentally, the support pin P3 functions as a pivoting shaft of the pole 37.

And, the first half-cut body 25 and the second half-cut body 27 are integrated by the support pin P4. Accordingly, a right end part of the support pin P4 is caulked from the right side surface (outer surface) of the first half-cut body 25 in a state where the right end part of the support pin P4 is passed through the pin hole 25D of the first half-cut body 25. A left end part of the support pin P4 is caulked from the left side surface (outer surface) of the second half-cut body 27 in a state where the left end part of the support pin P4 is passed through the pin hole 27D of the second half-cut body 27.

Incidentally, the first half-cut body 25 and the second half-cut body 27 forming the lever body 15 are also integrated by the support pin PI, P2, and P3.

The flange part 25E of the first half-cut body 25 and the flange part 27E of the second half-cut body 27 are integrated by integrating the first half-cut body 25 and the second half-cut body 27 as described above, and the sector 13, the compression coil spring 31, the first knob member 32, the second knob member 33, the release rod 35, the pole 37, and the ratchet 39 are incorporated into the lever body 15.

The integrated flange parts 25E, 27E switch on and off of the contact of the parking brake switch BS by pressure contacting or separating from the contact in response to the pivoting of the lever body 15.

As illustrated in FIG. 3, a housing part 32A is provided in the first knob member 32. The second knob member 33 is fitted to the housing part 32A. A spring receiving part 33A is provided on a rear side surface of the second knob member 33. A mounting protrusion 35A is provided at a front end part of the release rod 35.

A coupling protrusion 35B is provided at a rear end part of the release rod 35. A coupling hole 37B is provided at an upper end part of the pole 37. The coupling protrusion 35B of the release rod 35 is engaged into the coupling hole 37B. Thus, the rear end part of the release rod 35 and the upper end part of the pole 37 are coupled with each other. A pawl 37 C is provided at a lower end part of the pole 37. The pawl 37C is engaged with the teeth section 39B of the ratchet 39. A front end part 25F of the first half-cut body 25 is provided with a substantial L-shaped pawl 41 by cutting and raising a plane portion.

The compression coil spring 31 is inserted into the release rod 35 from the front end part of the release rod 35. The front end part of the release rod 35 is housed into the housing part 32A of the first knob member 32 together with the mounting protrusion 35A provided at the front end part of the release rod 35. In the housing part 32A of the first knob member 32, the mounting protrusion 35A of the release rod 35 is engaged. Further, the second knob member 33 is fitted to the housing part 32A of the first knob member 32. Thus, the front end part of the release rod 35 is coupled to the release knob 19 formed by the first knob member 32 and the second knob member 33.

A first end part of the compression coil spring 31 is mounted in the spring receiving part 33A of the second knob member 33. A second end part of the compression coil spring 31 is locked in the locking pawl 41 of the first half-cut body 25. Thus, the compression coil spring 31 is slightly in a compressed state, generating a restoration force. The release knob 19 formed by the first knob member 32 and the second knob member 33 is biased toward the front direction by the restoration force of the compression coil spring 31. Further, the pole 37 is biased counterclockwise in FIG. 3 through the release rod 35 by the restoration force of the compression coil spring 31, engaging the pawl 37C of the pole 37 with the teeth section 39B of the ratchet 39.

When the first half-cut body 25 and the second half-cut body 27 are integrated in the above-mentioned state, the front end part of the lever body 15 is formed into a substantial cylindrical shape by overlapping the front end part 25F of the first half-cut body 25 and the front end part 27F of the second half-cut body 27 with each other. Further, the release knob 19 is protruded from the front end part SA of the operation part S when the grip member 17 is mounted at the front end part of the lever body 15. When a driver performs push-in operation of the release knob 19, the release rod 35 moves toward the pole 37, and the pole 37 moves clockwise in FIGs. 2 and 3, separating the pawl 37C of the pole 37 from the teeth 39B of the ratchet 39. Accordingly, the driver can perform the pivoting operation of the lever body 15. In contrast, when the driver releases the push-in operation of the release knob 19, the release rod 35 moves toward the release knob 19 accompanying with protruding the front end part SA of the operation part S from the release knob 19, the pole 37 moves counterclockwise in FIGs. 2 and 3 and the pawl 37C of the pole 37 is engaged with the teeth 39B of the ratchet 39. Accordingly, the position of the lever body 15 can be held.

### [2. Structure of the Sector and the Ratchet]

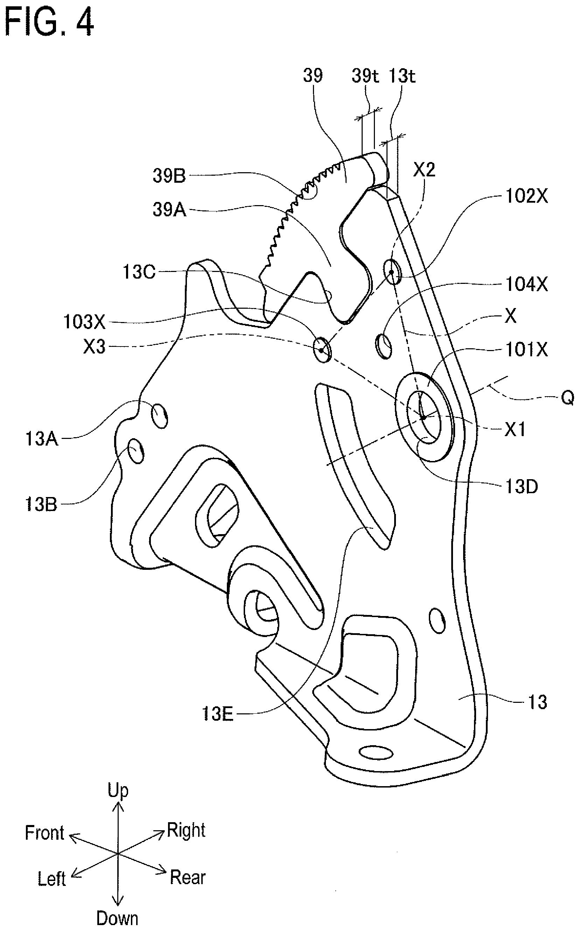

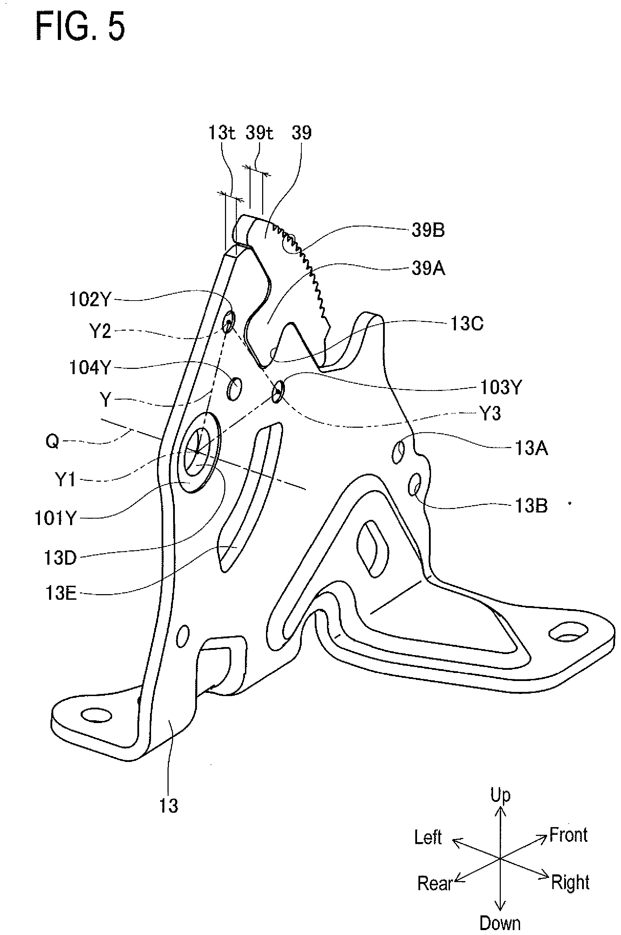

Next, each structure of the sector 13 and the ratchet 39 is described in detail with reference to FIGs. 4 to 6. As illustrated in FIGs. 4 and 5, the teeth section 39B is formed along an outer periphery of the front upper part of the ratchet 39 at the front upper part of the ratchet 39. The ratchet 39 is made smaller than the sector 13 using a quenched metal as a material in order to ensure the strength of the teeth section 39B. The protrusion part 39A of which the outer periphery protrudes toward the outer side is formed at the rear lower end part of the ratchet 39.

The cut part 13C of which outer periphery enters inward is formed at a front upper end part of the sector 13. The protrusion part 39A of the ratchet 39 is fitted into the cut part 13C of the sector 13. The cut part 13C of the sector 13 fixes the protrusion part 39A of the ratchet 39 by caulking a peripheral edge of the cut part 13C of the sector 13. Accordingly, a steel not subjected to quenching is used for the sector 13. As described above, the ratchet 39 is provided in a state fixed along the outer periphery of the sector 13 at the front upper end part of the sector 13.

The pivoting pin hole 13D is provided at a rear end part of the sector 13. The support pin P1 for making the lever body 15 formed by the first half-cut body 25 and the second half-cut body 27 pivotable with respect to the sector 13 is fitted through the pivoting pin hole 13D. Accordingly, the lever body 15 can pivoted with respect to the sector 13 by the support pin P1 in a state where the first half-cut body 25 and the second half-cut body 27 forming the lever body 15 sandwich the sector 13.

Each of the thicknesses 13t, 39t of the sector 13 and the ratchet 39 is the same as a length in an axis Q direction, i.e. the right and left direction of the support pin P1. The thickness 13t of the sector 13 is thinner than the thickness 39t of the ratchet 39. Accordingly, a level difference formed by the sector 13 and the ratchet 39 is located on a left side surface and a right side surface of the sector 13.

While a first protrusion part 101X, a second protrusion part 102X, a third protrusion part 103X, and a recessed part 104X are provided on the left side surface of the sector 13, a first recessed part 101Y, a second recessed part 102Y, a third recessed part 103Y, and a protrusion part 104Y are provided on the right side surface of the sector 13.

As the first recessed part 101Y is formed on the right side surface of the sector 13 by press working, the first protrusion part 101X is formed on the left side surface of the sector 13. Accordingly, the first protrusion part 101X on the left side surface of the sector 13 and the first recessed part 101Y on the right side surface of the sector 13 are in a front-and-rear relationship with each other. In this regard, a relationship between the second protrusion part 102X on the left side surface of the sector 13 and the second recessed part 102Y on the right side surface of the sector 13, a relationship between the third protrusion part 103X on the left side surface of the sector 13 and the third recessed part 103Y on the right side surface of the sector 13, and a relationship between the recessed part 104X on the left side surface of the sector 13 and the protrusion part 104Y on the right side surface are also in a front-and-rear relationship with each other .

On the left side surface of the sector 13, the first protrusion part 101X is provided in the peripheral edge of the pivoting pin hole 13D, i.e. the peripheral edge of the support pin P1 fitted through the pivoting pin hole 13D. Accordingly, the first protrusion part 101X has a doughnut shape. Further, the second protrusion part 102X and the third protrusion part 103X are provided in the cylindrical shape in the vicinity of the cut part 13C. Thereby, the second protrusion part 102X and the third protrusion part 103X are located closer to the teeth section 39B of the ratchet 39.

A center point X1 of the first protrusion part 101X, a center point X2 of the second protrusion part 102X, and a center point X3 of the third protrusion part 103X can form a triangle X with the center points as apexes on the left side surface of the sector 13. As in the case with the above, a center point Y1 of the first recessed part 101Y, a center point Y2 of the second recessed part 102Y, and a center point Y3 of the third recessed point 103Y can form a triangle Y with the center points as apexes on the right side surface of the sector 13.

The triangle X on the left side surface of the sector 13 and the tringle Y on the right side surface of the sector 13 are in a front-and-rear relationship with each other. In other words, the triangle Y that is a projection part can be provided on the right side surface of the sector 13 by projecting the triangle X on the left side surface of the sector 13 in the right direction of the axis Q of the support pin P1.

The cylindrical recessed part 104X is provided in the triangle X on the left side surface of the sector 13. Thus, the cylindrical protrusion part 104Y is provided in the triangle Y on the right side surface of the sector 13.

As described above, the each protrusion part 101X, 102X, and 103X provided on the left side surface of the sector 13 and the protrusion part 104Y provided on the right side surface of the sector 13 have a relative positional relationship defined by the each triangle X, Y

Incidentally, the center point X1 of the first protrusion part 101X and the center point Y1 of the first recessed part 101Y are the pivoting center of the support pin PI, i.e. the pivoting center of the lever body 15. Accordingly, hereinafter, the center point X1 is referred to as the pivoting center X1 of the lever body 15.

Each height of the first protrusion part 101X, the second protrusion part 102X, the third protrusion part 103X provided on the left side surface of the sector 13 has at least a length corresponding to a distance from the left side surface of the sector 13 to the right side surface (inner surface) of the second half-cut body 27 forming the lever body 15. Accordingly, each distal end part of the first protrusion part 10IX, the second protrusion part 102X, the third protrusion part 103X provided on the left side surface of the sector 13 contacts the right side surface (inner surface) of the second half-cut body 27 forming the lever body 15.

A height of the protrusion part 104Y provided on the right side of the sector 13 has at least a length corresponding to a distance from the left side surface of the sector 13 to the left side surface (inner surface) of the first half-cut body 25 forming the lever body 15. Accordingly, a distal end part of the protrusion part 104Y provided on the right side surface of the sector 13 contacts the left side surface (inner surface) of the first half-cut body 25 forming the lever body 15.

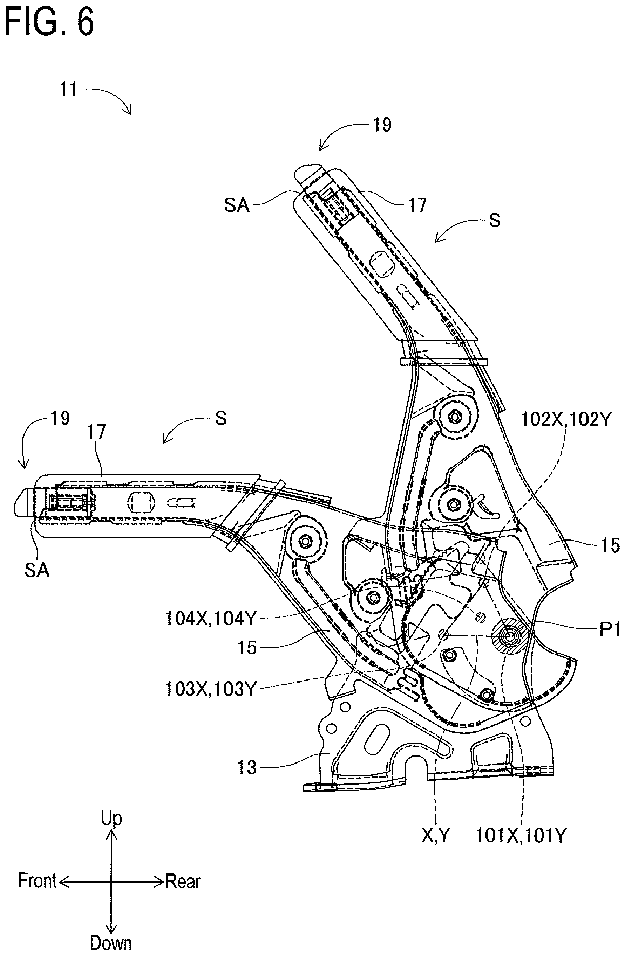

As illustrated in FIG. 6, even though a driver holds the operation part S and pivots the lever body 15 clockwise or counterclockwise in FIG. 6, the triangle X on the left side surface of the sector 13 and the triangle Y on the right side surface of the sector 13 constantly overlap with the lever body 15 in the direction of the axis Q of the support pin PI, i.e. the vertical direction on the surface of the paper sheet in FIG. 6. Accordingly, the each protrusion part 101X, 102X, 103X, and 104Y provided in the sector 13 constantly contacts one of the inner surfaces of the first half-cut body 25 and the second half-cut body 27 forming the lever body 15 within a range of pivoting the lever body 15 with respect to the sector 13.

Incidentally, at both of a state where the operation part S is horizontally put in the front-and - rear direction without performing the pivoting operation and a state where the operation part S is inclined at the most in the front-and-rear direction after the maximum pivoting operation is performed, a range of overlapping the lever body 15 and the sector 13 in the direction of the axis Q of the support pin PI, i.e. the vertical direction on the surface of the paper sheet in FIG. 6 corresponds to "a range of pivoting the lever body with respect to the sector".

### [3. Others]

Incidentally, in the present embodiment, the support pin P1 is an example of "a pivot pin". The axis Q of the support pin P1 is an example of "an axis of the pivot pin". The right and left direction is an example of "an axial direction of the pivot pin". The left side surface (inner surface) of the first half-cut body 25 and the right side surface (inner surface) of the second half-cut body 27 are an example of "an inner wall surface of the lever body". The left side surface of the sector 13 is an example of "one surface of the sector". The right side surface of the sector 13 is an example of "the other surface of the sector". The first protrusion part 101X, the second protrusion part 102X, the third protrusion part 103X on the left side surface of the sector, and the protrusion part 104Y on the right side surface of the sector 13 are an example of "a protrusion part". The each distal end part of the first protrusion part 10IX, the second protrusion part 102X, the third protrusion part 103X on the left side surface of the sector 13, and the protrusion part 104Y on the right side surface of the sector 13 is an example of "a distal end part of the protrusion part". The triangle Y is an example of "a projection part".

### [4. Summary]

In the parking brake lever device 11 according to the present embodiment, since the ratchet 39 is fixed to the sector 13, the ratchet 39 and the sector 13 are separately formed. Since the thickness 13t of the sector 13 is thinner than the thickness 39t of the ratchet 39, mass and cost of the sector 13 are reduced. Further, the strength of the teeth section 39B provided in the ratchet 39 is maintained by setting the thickness 39t of the ratchet 39 to the conventionally determined thickness. Accordingly, weight and cost can be reduced while ensuring the strength of the teeth section 39B provided in the ratchet 39 separately formed from the sector 13.

The sector 13 and the ratchet 39 are very thick parts in components of the parking brake lever device 11 according to the present embodiment. Especially, the sector 13 is larger than the ratchet 39. Accordingly, the weight and the cost can be reduced most effectively by making the thickness 13t of the sector 13 thinner than the thickness 39t of the ratchet 39.

In the parking brake lever device 11 according to the present embodiment, the first protrusion part 101X, the second protrusion part 102X, the third protrusion part 103X, and the protrusion part 104Y are protruded from the sector 13 in the direction of the axis Q of the support pin P1. The distal end part of the each protrusion part 101X, 102X, 103X, and 104Y contacts one of the inner surfaces of the first half-cut body 25 and the second half-cut body 27 forming the lever body 15. Accordingly, rattling of the lever body 15 can be prevented.

In the parking brake lever device 11 according to the present embodiment, the first protrusion part 101X, the second protrusion part 102X, the third protrusion part 103X, and the protrusion part 104Y contacting one of the inner surfaces of the first half-cut body 25 and the second half-cut body 27 forming the lever body 15 are provided in the sector 13 thinner than the conventional product. Accordingly, components of the parking brake lever device 11 except for the sector 13 can be replaced with conventional products. Therefore, in a relationship with the conventional technique, parts can be used in common.

In the parking brake lever device 11 according to the present embodiment, the distal end part of the each first protrusion part 101X, second protrusion part 102X, third protrusion part 103X, and protrusion part 104Y provided in the sector 13 constantly contacts one of the inner surfaces of the first half-cut body 25 and the second half-cut body 27 forming the lever body 15 within the range of pivoting the lever body 15 with respect to the sector 13. Accordingly, rattling of the lever body 15 can be eliminated.

In the parking brake lever device 11 according to the present embodiment, since the right side surface (inner surface) of the second half-cut body 27 forming the lever body 15 has three contact points of the distal end parts of the each protrusion part 101X, 102X, and 103X provided on the left side surface of the sector 13, the distal end part of the each protrusion part 101X, 102X, and 103X evenly contacts the right side surface (inner surface) of the second half-cut body 27.

Further, the each protrusion part 101X, 102X, 103X provided on the left side surface of the sector 13, and the protrusion part 104Y provided on the right side surface of the sector 13 are in a relative positional relationship defined by the each triangle X, Y.

According to the relative positional relationship as described above, the protrusion part 104Y is provided on the right side surface of the sector 13 opposite to the left side surface thereof in the triangle Y having a front-and-rear relationship with the triangle X defined by the center points X1, X2, and X3 of the each protrusion part 101X, 102X, and 103X evenly contacting as described above. The distal end part of the protrusion part 104Y contacts the left side surface (inner surface) of the first half-cut body 25 forming the lever body 15.

Thereby, the distal end part of the each protrusion part 101X, 102X, 103X, and 104Y contacts the lever body 15 with a good balance. Accordingly, the lever body 15 can be prevented from inclining toward the sector 13 due to the contact of the distal end of the each protrusion part 101X, 102X, 103X, and 104Y

In the parking brake lever device 11 according to the present embodiment, the distal end part of the first protrusion part 101X provided on the left side surface of the sector 13 contacts the right side surface (inner surface) of the second half-cut body 27 forming the lever body 15 at a position adjacent to the pivoting center X1 of the lever body 15. In addition, since the each distal end part of the second protrusion part 102X and the third protrusion part 103X provided on the left side surface of the sector 13 contacts the right side surface (inner surface) of the second half-cut body 27 forming the lever body 15 at a position farther from the pivoting center X1 of the lever body 15 than the distal end part of the first protrusion part 101X, the rattling of the lever body 15 can be efficiently eliminated.

### [5. The Protrusion Direction of the Protrusion Part]

When attention is paid to a tension of the brake cable 21, the protrusion direction of the each protrusion part 101X, 102X, and 103X provided on the one surface of the sector 13 and the protrusion direction of the one protrusion part 104Y provided on the other surface of the sector 13 having a front-and-rear relationship with the one surface of the sector 13 have desirable directions.

As a reason why the above protrusion directions have the desirable directions, although the brake cable 21 inclines the lever body 15 toward the brake cable guide 29 by applying a tension generated when the lever body 15 is pivoted to the lever body 15 through the brake cable guide 29, an effect of preventing or reducing such the inclination is greater in the each protrusion part 101X, 102X, 103X provided on the one surface of the sector 13 than in the one protrusion part 104Y provided on the other surface of the sector 13 having a front-and-rear relationship with the one surface.

That is, when the each protrusion part 101X, 102X, 103X is provided on the one surface of the sector 13 so as to protrude in a direction opposite to the cable guide 29, the each protrusion part 101X, 102X, 103X contacts and supports the inner surface of the lever body 15 over a wide range (namely, the triangle X with the each center point X1, X2, X3 as apexes) on the one surface of the sector 13 opposite to the cable guide 29, and thus the inclination of the lever body 15 toward the cable guide 29 can be effectively prevented or reduced.

In the present embodiment, since the cable guide 29 is located in the right direction of the sector 13, the each protrusion part 101X, 102X, 103X is provided on the left side surface of the sector 13 in order to protrude in the direction opposite to the cable guide 29, i.e. the left direction of the sector 13. Accordingly, the one protrusion part 104Y is protruded in the right direction of the sector 13 by providing the one protrusion part 104Y on the right side surface having the front-and-rear relationship with the left side surface of the sector 13.

### [6. Variation]

The present embodiment does not limit the present invention. It is a matter of course that the present invention can be improved and modified in various ways without departing from the spirit of the present invention. For example, in the present embodiment, the protrusion part 104Y provided on the right side surface of the sector 13 may be two or more, and the protrusion part 104Y may be outside the triangle Y provided on the right side surface of the sector 13 if attention is not paid to the balance of the contact with respect to the above-mentioned lever body 15.

And, on the left side surface of the sector 13, one or two or more new protrusion parts may be provided in addition to the each protrusion part 101X, 102X, and 103X. Alternatively, one or two protrusion parts from the each protrusion part 101X, 102X, and 103X may be provided if attention is not paid to the balance of the contact with respect to the above-mentioned lever body 15.

And, the distal end part of the each protrusion part 101X, 102X, 103X, and 104X provided in the sector 13 can be formed into various shapes. For example, the distal end part may be flat shape or curved shape.

And, different from the present embodiment, when the cable guide 29 is located in the left direction of the sector 13, in view of paying attention to the tension of the above-mentioned brake cable 21, it is preferable that the each protrusion part 10IX, 102X, 103X provided in the sector 13 is protruded in the direction opposite to the cable guide 29, i.e. the right direction of the sector 13. Accordingly, the protrusion part 104Y provided in the sector 13 is protruded in the direction on the cable guide 29 side, i.e. the left direction of the sector 13.

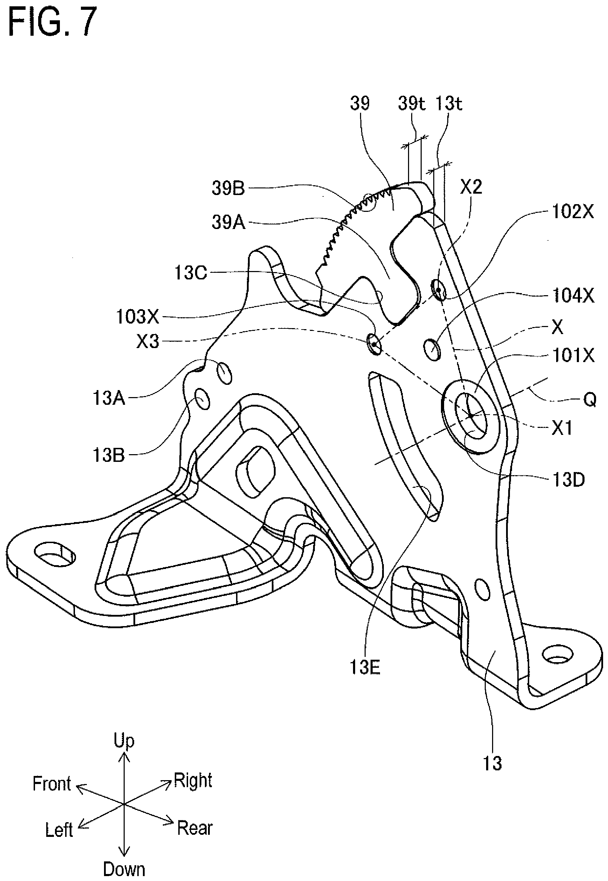

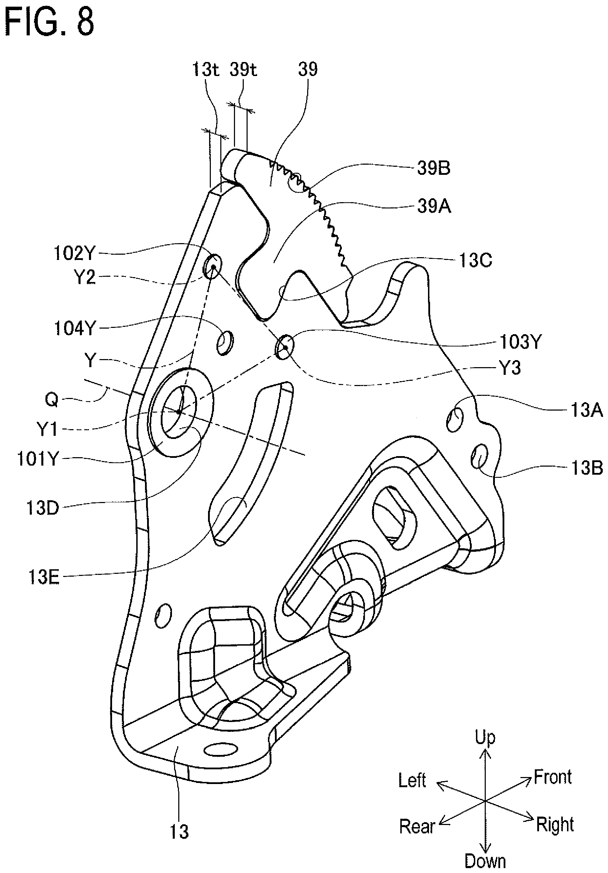

In this case, the above-mentioned FIGs. 4 and 5 are changed to FIGs. 7 and 8. In FIGs. 7 and 8, the same reference signs are followed in parts in common with the above-mentioned first embodiment, and the detailed description will be omitted. In FIGs. 7 and 8, the each reference sign 10IX, 102X, 103X, and 104Y is changed to reference signs indicating a recessed part, and the each reference sign 101Y, 102Y, 103Y, and 104X is changed to reference signs indicating a protrusion part.

Further, in FIGs. 7 and 8, the sector 13 for a right-handle vehicle is illustrated by each folding direction of a pair of mounting leg part provided at the lower end part of the sector 13. In contrast, in FIGs. 2, 4 and 5 illustrating the above-mentioned embodiment, the sector 13 for a left-handle vehicle is illustrated since the each folding direction is opposite to the direction in FIGs. 7 and 8.

And, when attention is not paid to the tension of the above-mentioned brake cable 21 and the balance of the contact with respect to the lever body 15, the protrusion direction of the each protrusion part 101X, 102X, 103X, and 104Y provided in the sector 13 may be either of left and right directions.

### EXPLANATION OF REFERENCE NUMERALS

11 parking brake lever device
13 sector
13t thickness of the sector
39 ratchet
39B teeth section of the ratchet
39t thickness of the ratchet
15 lever body
101X first protrusion part on the left side surface of the sector
102X second protrusion part on the left side surface of the sector
103X third protrusion part on the left side surface of the sector
104Y protrusion part on the right side surface of the sector
P1 support pin
Q axis of the support pin
X a triangle with each protrusion part provided on the left side surface of the sector as apexes
Y a triangle with each recessed part provided on the right side surface of the sector as apexes

## Claims

1. A parking brake lever device comprising:
a ratchet (39) provided with a teeth section (39B);
a sector (13) fixed with the ratchet (39); and
a lever body (15) provided pivotally with respect to the sector (13) in a state where the sector (13) is sandwiched via a pivot pin (P1) inserted into the sector (13),
**characterized in that**
a thickness (13t) of the sector (13) is thinner than a thickness (39t) of the ratchet (39) in an axial direction of the pivot pin (P1), and
the parking brake lever device further comprises a protrusion part (101X, 102X, 103X, 104Y) of which a distal end part contacts an inner wall surface of the lever body (15) by being protruded from the sector (13) in the axial direction of the pivot pin (P1).

2. The parking brake lever device according to claim 1, wherein the protrusion part (101X, 102X, 103X, 104Y) constantly contacts the inner wall surface of the lever body (15) within a range of pivoting the lever body (15) with respect to the sector (13).

3. The parking brake lever device according to claim 2, wherein three protrusion parts (101X, 102X, 103X) are provided on one surface of the sector (13), and one protrusion part (104Y) is provided on the other surface of the sector (13), and wherein
the protrusion part (104Y) provided on the other surface of the sector (13) is located in a projection part (Y) provided on the other surface of the sector (13) by projecting a triangle (X) with the three protrusion parts (101X, 102X, 103X) provided on the one surface of the sector (13) as apexes in the axial direction of the pivot pin (P1).

4. The parking brake lever device according to claim 3, wherein one protrusion part (101X) provided on the one surface of the sector (13) is provided along a peripheral edge of the pivot pin (P1), and two protrusion parts (102X, 103X) are provided closer to the teeth section (39B) of the ratchet (39).

## Patentansprüche

1. Feststellbremsenhebelvorrichtung mit:
einem Sperrrad (39), das mit einem Zahnbereich (39B) versehen ist;
einem Abschnitt (13), das mit dem Sperrrad (39B) befestigt ist; und
einem Hebelkörper (15) der schwenkbar bezüglich dem Abschnitt (13) in einem Zustand vorgesehen ist, in dem der Abschnitt (13) mittels einem Lagerbolzen (P1) eingezwängt ist, der in den Abschnitt (13) eingesetzt ist,
**dadurch gekennzeichnet, dass**
eine Dicke (13t) des Abschnittes (13) dünner ist, als eine Dicke (39t) des Sperrrads (39) in einer axialen Richtung des Lagerbolzens (P1), und
die Feststellbremsenhebelvorrichtung ein Vorsprungsteil (101X, 102X, 103X, 104Y) aufweist, von dem ein distales Endteil eine innere Wandfläche des Hebelkörpers (15) berührt, indem es in der axialen Richtung des Lagerbolzens (P1) von dem Abschnitt (13) herausgekragt ist.

2. Feststellbremsenhebelvorrichtung nach Anspruch 1, wobei das Vorsprungsteil (101X, 102X, 103X, 104Y) die innere Wandfläche des Hebelkörpers (15) fortlaufend berührt, innerhalb eines Bereiches einer Schwenkbewegung des Hebelkörpers (15) bezüglich des Abschnitts (13).

3. Feststellbremsenhebelvorrichtung nach Anspruch 2, wobei drei Vorsprungsteile (101X, 102X, 103X) auf einer Fläche auf dem Abschnitt (13) vorgesehen sind und ein Vorsprungsteil (104Y) auf der anderen Fläche des Abschnitts (13) vorgesehen ist und wobei
das Vorsprungsteil (104Y), das auf der anderen Fläche des Abschnittes (13) vorgesehen ist, sich in einem Vorsprungsteil (Y) befindet, das auf der anderen Fläche des Abschnitts (13) vorgesehen ist, mittels Herauskragen eines Dreiecks (X) mit den drei Vorsprungsteilen (101X, 102X, 103X), die auf der anderen Fläche des Abschnitts (13) als Eckpunkte in der axialen Richtung des Lagerbolzens (P1) vorgesehen sind.

4. Feststellbremsenhebelvorrichtung nach Anspruch 3, wobei ein Vorsprungsteil (101X), das auf der einen Fläche des Abschnitts (13) vorgesehen ist, entlang einer Umfangskante des Lagerbolzens (P1) vorgesehen ist und zwei Vorsprungsteile (102X, 103X) näher an dem Zahnbereich (39B) des Sperrrades (39) vorgesehen sind.

## Revendications

1. Dispositif du type levier de frein de stationnement comprenant :
un cliquet (39) prévu avec une section de dents (39B) ;
un secteur (13) fixé avec le cliquet (39) ; et
un corps de levier (15) prévu, de manière pivotante, par rapport au secteur (13) dans un état dans lequel le secteur (13) est pris en sandwich via une broche de pivot (P1) insérée dans le secteur (13),
**caractérisé en ce que** :
une épaisseur (13t) du secteur (13) est plus fine qu'une épaisseur (39t) du cliquet (39) dans une direction axiale de la broche de pivot (P1), et
le dispositif du type levier de frein de stationnement comprend en outre une partie de saillie (101X, 102X, 103X, 104Y) dont une partie d'extrémité distale est en contact avec une surface de paroi interne du corps de levier (15) en faisant saillie à partir du secteur (13) dans la direction axiale de la broche de pivot (P1).

2. Dispositif du type levier de frein de stationnement selon la revendication 1, dans lequel la partie de saillie (101X, 102X, 103X, 104Y) est en contact, de manière constante, avec la surface de paroi interne du corps de levier (15) dans une plage de pivotement du corps de levier (15) par rapport au secteur (13) .

3. Dispositif du type levier de frein de stationnement selon la revendication 2, dans lequel trois parties de saillie (101X, 102X, 103X) sont prévues sur une surface du secteur (13), et une partie de saillie (104Y) est prévue sur l'autre surface du secteur (13), et dans lequel :
la partie de saillie (104Y) prévue sur l'autre surface du secteur (13) est positionnée dans une partie de saillie (Y) prévue sur l'autre surface du secteur (13) en projetant un triangle (X) avec les trois parties de saillie (101X, 102X, 103X) prévues sur la une surface du secteur (13) en tant que sommets dans la direction axiale de la broche de pivot (P1).

4. Dispositif du type levier de frein de stationnement selon la revendication 3, dans lequel une partie de saillie (101X) prévue sur la une surface du secteur (13) est prévue le long d'un bord périphérique de la broche de pivot (P1), et deux parties de saillie (102X, 103X) sont prévues plus à proximité de la section de dents (39B) du cliquet (39).
